# EUROPÄISCHE PATENTSCHRIFT

(11) **EP 3 367 776 B1**
(45) Veröffentlichungstag und Bekanntmachung des Hinweises auf die Patenterteilung: **29.07.2020**
(21) Anmeldenummer: 16800877.9
(22) Anmeldetag: 27.10.2016
(51) Int. Cl.: A01C 5/06

(54) **ANDRUCKROLLE FÜR EINE LANDWIRTSCHAFTLICHE SÄMASCHINE**
PRESS WHEEL FOR AGRICULTURAL SEEDER
ROUE DE PRESSION POUR SEMOIR AGRICOLE

(30) Priorität: 30.10.2015 DE 102015118640
(43) Veröffentlichungstag der Anmeldung: 05.09.2018
(73) Patentinhaber: Lemken GmbH & Co. KG, 46519 Alpen (DE)
(72) Erfinder: GEBBEKEN, Martin, 46519 Alpen (DE); BERGERFURTH, Dennis, 46459 Rees (DE); BERENDSEN, Mark, 7044 AJ Lengel (NL); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE); VAN KANN, Andreas, 53949 Dahlem (DE); DIEPERS, Clemens, 47647 Aldekerk (DE)
(86) Internationale Anmeldenummer: PCT/DE2016/100506
(87) Internationale Veröffentlichungsnummer: WO 2017/071692

(56) Entgegenhaltungen:
- WO-A1-2011/119095
- DE-A1- 3 201 994
- US-A- 4 153 303
- US-A- 5 725 284
- US-A1- 2010 107 946

## Beschreibung

Die Erfindung betrifft eine Andruckrolle für eine landwirtschaftliche Sämaschine zum präzisen Ausbringen von Saatgut gemäß dem Oberbegriff des Patentanspruches 1.

Aus der US-Patentanmeldung US 4 141 302 A ist eine Einzelkornsämaschine bekannt, bei der Saatgut in definierten Abständen in eine durch ein Doppelscheibenschar geöffnete Furche abgelegt wird. Um ein Verrollen des Saatgutes innerhalb der Furchen zu verhindern, wird das Saatgut mit einer Andruckrolle in den Furchenboden angedrückt. Ein ähnliches Gerät wird in der deutschen Anmeldung DE 10 2013 111 355 vorgestellt, allerdings mit zwei schräg gegeneinander angestellten Einscheibenscharen mit zwischenliegender Tiefenführungsrolle, wobei den jeweiligen Einscheibenscharen ebenfalls Andruckrollen zugeordnet sind, welche unmittelbar nach dem Saatgutauslass die Saatgutkörner in den Furchenboden drücken. Um auch in schwierigen, klebrigen Bodenverhältnissen ein Festsetzen oder Blockieren der Andruckrollen in der Furche zu verhindern, schlägt die europäische Patentanmeldung EP 404 241 A1 ein mit etwa der Fahrtgeschwindigkeit des Sägerätes angetriebenes Andruckrad vor, welches ein Verschieben der Saatgutkörner innerhalb der Furchen verhindert. Eine weitere Form eines Andruckrades wird in dem europäischem Patent EP 1 461 988 B1 beschrieben, wobei ein elastischer, rechteckiger Hohlreifen den U-förmigen Furchenquerschnitt eines Scharschuhes hinter einem Doppelscheibenschar ausfüllt und über dessen Unterkante hinaus steht und die Saatkörner andrückt. Über ein beanspruchtes Längen-Breitenverhältnis von mindestens 2:1, vorzugsweise 3:1, soll ein selbstreinigender Walkeffekt des Hohlreifens erreicht werden. Dabei wird ein starrer Felgenkörper mit einer Klemmnut für den Reifen bis nahezu an den Hohlkörper des Reifens herangeführt. Insbesondere beim Einsetzen des Sägerätes in den Boden, bei einer nicht rechteckigen Furchenausführung und bei Kurvenfahrt führt dies zu ungewollter Verformung des Hohlreifens, wodurch dieser nicht sauber über die abgelegten Saatgutkörner geführt werden kann oder sogar aus dem Furchenquerschnitt heraustritt. Die Anmelderin selbst redet von einer schwabbeligen Ausführung. In der späteren Publikation DE 10 2012 108 006 A1 der gleichen Anmelderin soll die Rolle bei nassen und klebrigen Bodenverhältnissen hochgeklappt oder herausgenommen werden. Eine ähnliche Rolle mit Klemmnabe wird in der WO2011/119095A1 oder in der US 2010/0107946A1 offenbart, womit jeweils der Oberbegriff des Anspruchs 1 offenbart wird.

Aufgabe der Erfindung ist es, eine Saatgutandruckrolle bereitzustellen, welche einen kleineren Reifen- oder Andruckquerschnitt aufweist, welche jedoch seitlich und/oder radial elastisch federnd ausgeführt ist, wobei durch die Elastizität der Andruckrolle verbesserte Führungs- und Selbstreinigungseigenschaften gewährleistet sind. Dabei soll die Andruckrolle haltbar, kostengünstig und vorzugsweise werkzeugfallend herstellbar sein.

Diese Aufgabe wird durch die Merkmale des kennzeichnenden Teiles des Anspruches 1 gelöst.

Durch Anordnung eines oder mehrerer Stegelemente, welche sich radial und partiell oder umlaufend zwischen äußerem Reifenelement und der Felge erstrecken, wobei die verbleibenden Freiräume zwischen Reifenelement, Nabe und Stegelementen mit einem Füllwerkstoff aus einem elastischen oder nachgiebigen Material aufgefüllt werden, werden das Reifenelement, die Nabe oder Felge und die Stegelemente form- oder stoffschlüssig miteinander verbunden, wodurch eine elastische Verformung zwischen Reifenelement und Nabe seitlich und/oder radial zur Laufachse der Andruckrolle gewährleistet wird. Vorzugsweise bildet der Füllwerkstoff die alleinige Verbindung zwischen Reifen, Nabe und/oder Stegelementen. Durch geschickte Auswahl des Werkstofffüllmateriales als auch durch Ausgestaltung der Stegelemente wird eine wesentlich bessere Führung der Andruckrolle innerhalb der Saatgutfurche erreicht.

Neben dem selbstreinigenden Walkeffekt, welcher durch die seitliche und/oder radiale Verformung des elastischen Füllmaterials entsteht, erreicht man unmittelbar am Furchengrund durch Ausbildung des Reifens mit zumindest einer elastischen Hohlkammer eine Abflachung des Reifens auf seine Aufstandsfläche in der Furche, welche ein sicheres Abbremsen der abgelegten Körner und einem gleichmäßigen Andruck derselben gewährleistet.

Formt man den Reifen innerhalb des Furchenbereiches als umlaufenden Hohlkammerkörper aus, wird unterhalb der Furchenoberkannte ein verbesserter Verform- und Walkeffekt erreicht, ohne die gesamte Seitenstabilität des Reifens zu gefährden. Dabei ist ein Höhen- / Breitenverhältnis des Reifenquerschnittes von etwa 1:1 oder kleiner, also breiter als hoch, anzustreben.-

Bildet man den Reifenwerkstoff mit einem Material einer anderen Elastizität aus, als für den Füllkörper gewählt wurde, so können die jeweiligen Verformungsbereiche des Reifens oder des Füllmateriales geschickt angeordnet und definiert werden, ohne sich in der Formgebung des Andruckrades unnötig einzuschränken.

Vorzugsweise wird der Steg entweder mit dem Reifen oder der Nabe form- oder stoffschlüssig und aus jeweils einem der Materialien, nämlich dem der Felge oder des Reifens, ausgebildet.

Um die Verbindung zwischen Stegelement und Füllkörper bzw. Reifen oder Nabe haltbarer zu gestalten, weisen der Steg und/oder der Füllkörper Ausbrüche oder Erhebungen auf, welche auf ihrer jeweiligen umlaufenden Fläche gleichmäßig verteilt sind und für eine weitere formschlüssige Verbindung zwischen Steg, dem fertigen Füllkörper und Felge oder Reifen sorgen.

Für eine wirtschaftliche und kostengünstige Serienfertigung bietet es sich an, den zwischen Reifen und/oder Nabe angeordneten Füllkörper in einem Urformverfahren wie Pressen, Vulkanisieren oder einem Gießverfahren herzustellen. Beispielsweise wird der Reifen mit Stegelement, ggf. auch die Nabe in eine Werkzeugform eingelegt und mit dem Füllmaterial umgossen, umformt oder umpresst.

Um ein Anhaften von insbesondere nassem Bodenmaterial an der Andruckrolle zu verhindern, weist der Füllkörper insbesondere an seinem Übergang zum Reifen eine stetige und/oder glatte Formgebung seiner seitlichen Flanken oder Flächen auf. Dabei entspricht die Flankenbreite in etwa der Breite des Reifenelementes.

Um in einer Einzelkornsämaschine eine präzise Saatgutablage und ein Verrollen der Saatgutkörner auch bei hohen Fahrt- oder Auftreffgeschwindigkeiten zu erreichen, wird die Andruckrolle möglichst unmittelbar hinter dem Saatgutauslass angeordnet, welcher einen Furchenöffner, vorzugsweise ein Doppelscheibenschar, vorgelagert ist.

Kostengünstig kann ein Andruckrad in einem Spritzguss, Schäum-, Vulkanisier-, Klebe- oder Pressverfahren in Großserie hergestellt werden. Dabei kommen mehrere Verfahrensschritte nacheinander in mehreren Teil- oder in einem Gesamtwerkzeug zum Einsatz. Auch Montageschritte können formgebend ersetzt oder automatisiert werden.

Die Erfindung zeichnet sich insbesondere dadurch aus, dass ein Reifenelement einer Andruckrolle, vorzugsweise ein Hohlreifen, zwischen Nabe und Reifen durch Stegelemente stabilisiert wird, wobei durch Auffüllen der Zwischenräume mit einem elastischen oder nachgiebigen Füllkörper eine verbesserte radiale und/oder seitliche Führung und Selbstreinigung der Andruckrolle erreicht werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 den Aufbau einer landwirtschaftlichen Sämaschine in perspektivischer Ansicht von schräg hinten,
Fig.2 eine Seitenansicht sowie ein Schnittbild der Andruckrolle und
Fig. 3 eine perspektivische Darstellung der Andruckrolle unter Freistellung des Füllmateriales zwecks besserem Verständnis.

### Figurenbeschreibung

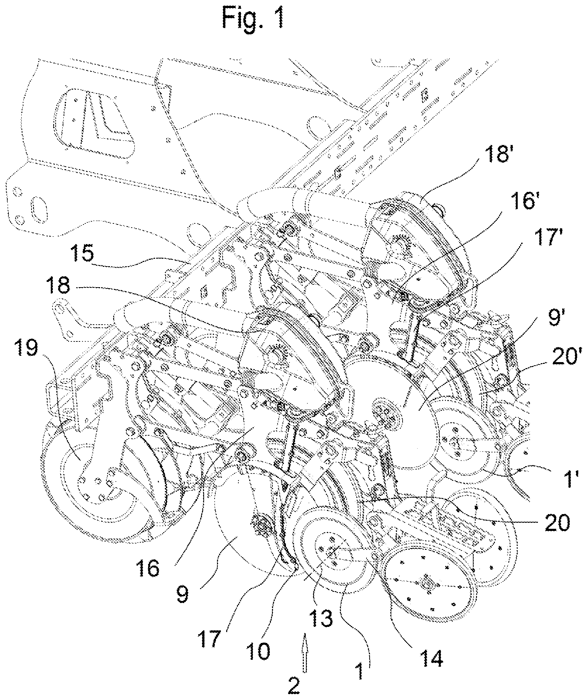

Figur 1 zeigt den prinzipiellen Aufbau einer landwirtschaftlichen Sämaschine 2, hier eine landwirtschaftliche Einzelkornsämaschine. Ein Rahmen 15 dient zum Anbau an ein Fahrzeug, welches die Sämaschine 2 über den Ackerboden bewegt. Nebeneinander sind zwei von mehreren Säeinheiten 16, 16' dargestellt, welchen jeweils eine profilierte Stützrolle zur Ausformung einer doppelten Saatgutrille vorweglaufen. Im Bereich der Stützrolle können nicht dargestellte Düngerschare zur Ausbringung von Dünger zwischen den beiden Saatgutrillen sowie weitere Räumwerkzeuge angeordnet werden. In Flucht der jeweiligen Saatgutrille folgt ein als Doppelscheibenschar ausgebildeter Furchenöffner 9, welcher eine als V- , U- oder W- Querschnitt ausgebildete Saatgutfurche zur Ablage von Saatgutkörnern in die durch die Stützrolle vorverdichtete Saatgutrille schneidet oder formt. Zwischen jeweils zwei Furchenöffnern 9 einer Säeinheit 16 ist eine weitere, höheneinstellbare Tiefenführungsrolle 20 zur Tiefenführung zweier benachbarter, vertikal beweglich aufgehängter Furchenöffner 9 integriert. Oberhalb der jeweiligen Säeinheit 16, 16' ist eine Dosiereinheit 18 zur abwechselnden Abgabe von einzelnen Saatgutkörnern in eine rechte und eine linke Leitung 17 angeordnet. Die rechte Leitung ist durch die Tiefenführungsrolle 20 verdeckt, die linke Leitung 17 durch Weglassen einer Scheibe des Doppelscheibenschares / Furchenöffners 9 jedoch gut sichtbar. Die Auslassöffnung 10 der Leitung 17 mündet in die durch den Furchenöffner 9 gezogene Furche unmittelbar vor der Andruckrolle 1, welche die aus der Auslassöffnung 10 austretenden Saatkörner auffängt und in den Furchenboden drückt. Die Andruckrolle 1 ist über eine Achse 13 drehbar gelagert und mit einen schwenkbaren Hebel 14 relativ zur Säeinheit 16 höhenverstellbar und kann durch einen Energiespeicher mit einer weiteren Andruckkraft beaufschlagt werden. Es folgen weitere Rollen oder Werkzeuge zum Verschließen der Furchen und Bedecken des Saatgutes mit Bodenmaterial.

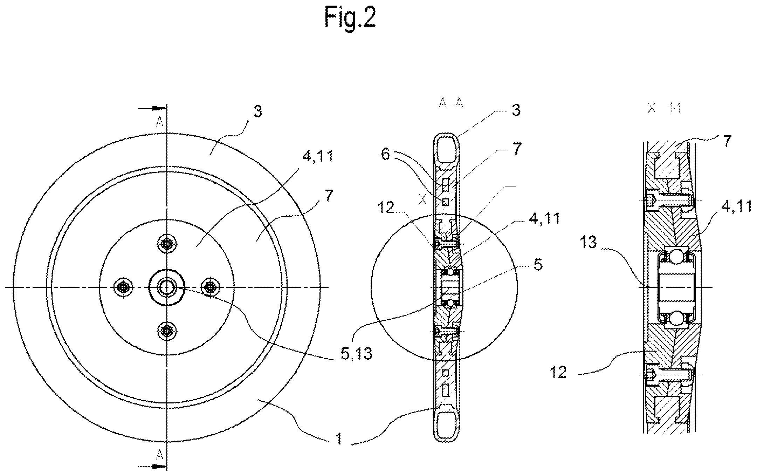

Figur 2 durch zeigt den eigentlichen Zusammenbau der Andruckrolle 1. Das Achsenkreuz beschreibt die Lage der Achse 13, um welche die Nabe 4 mittels eines Lagers 5 frei rotiert. Das Lager 5 wird durch zwei Nabenhälften 11, 12, welche mit Befestigungsmitteln wie beispielsweise dargestellten Schrauben und Muttern oder Nieten fixiert werden, innerhalb der Nabe 4 in Position gehalten. Ein umlaufendes Hohlkammerprofil, welches einen Furchenquerschnitt bzw. dessen Seitenflanken in seiner Form angepasst ist und dem Außendurchmesser der Andruckrolle 1 begrenzt, stellt den Reifen oder das Reifenelement 4 dar. Der Reifen 4 ist aus einem Elastomer wie Gummi oder Polyurethan, vorteilhafterweise in einer Elastizität bzw. Härte von 50-60 Grad Shore, hergestellt. Die Hohlkammer kann drucklos (semipneumatisch) oder druckdicht oder mit einem vorzugsweise weichen Füllschaum aufgefüllt ausgeführt sein. Ebenso kann der Reifen 4 bzw. sein Querschnitt auch als Vollprofil, beispielsweise aus Edelstahl, einem Kunststoff wie Polyamid, aber auch einem der vorgenannten Elastomere ausgeführt sein. Im Falle eines Vollprofiles ist die Profilhöhe vorzugsweise kleiner als die Breite des Reifenprofilquerschnittes bzw. der Andruckrolle.

Sowohl das Hohlprofil oder das Vollprofil des Reifens 4 können auf seiner Außenlauffläche mit einem Reifenprofil mit Rillen und/oder Erhebungen zur Unterstützung des Bodenantriebs der Andruckrolle in der Furche oder zur Verbesserung der Saatgutkornfang- oder Selbstreinigungseigenschaften versehen werden. Der das Profil des Reifens 3 begrenzende Innendurchmesser setzt sich in ein konzentrisch zur Achse 13 umlaufendes, sich zum inneren der Andruckrolle 1 erstreckendes Stegelement 6 fort. Das Stegelement 6 wird vorzugsweise mit dem Reifen 3 zusammen und aus gleichem Material gefertigt. Hierzu bietet sich eine Stegunterteilung über eine aufrechte Reifen- oder Werkzeugtrennebene in zwei sich aus den Reifenflanken fortsetzenden Steghälften an, welche flächig gegeneinander stehen und die Reifenhohlkammer nach innen begrenzen. Gleichmäßige um die Achse 13 angeordnet wird das Stegelement 6 von Aus- oder Durchbrüchen 8, wie Bohrungen, Langlöchern, oval- oder nierenförmigen, vorzugsweise konzentrisch nach innen zulaufenden Formen, unterbrochen. Durch Breite und Höhe der Stegelemente 6 als auch durch Anzahl und Ausführung der Ausbrüche können im Zusammenspiel mit dem elastischen Füllkörper 7, welcher die verbleibende Restkontur der Andruckrolle zwischen Reifen 3 und Nabe 4 auffüllt, verschiedenste seitliche und radiale Führungs- und Federungseigenschaften der Andruckrolle erzeugt werden. Bei einer eher schmalen Breite des Stegelementes 6 ist der Füllkörper mit einer größeren ShoreHärte als die des Reifenwerkstoffes zu wählen, vorzugsweise zwischen 60 und 80 Grad Shore. Sind die Stegelemente eher großvolumig mit kleineren oder weniger Ausnehmungen versehen, ist die Shorehärte des Füllmateriales unterhalb der des Reifenwerkstoffes zu wählen, etwa zwischen 20 und 50 Grad Shore. Im Gegensatz zu einem reinen Elastomerfüller, welcher zwischen Reifen und Nabe vergossen werden könnte, wird durch die Durchbrüche im Stegelement ein Formschluss zwischen Reifen, Nabe und/oder Stegelement erreicht, welcher ein vorzeitiges Ablösen der vorgenannten Komponenten bzw. dessen Körpers voneinander wirksam und einfach verhindert. Die jeweiligen Nabenhälften 11, 12 sind im Außenbereich mit umlaufenden Nuten versehen, welche das korrespondierend geformte Füllkörpermaterial bzw. sich partiell daran erstreckende Stegelement seitlich und konzentrisch um die Achse 13 fixieren.

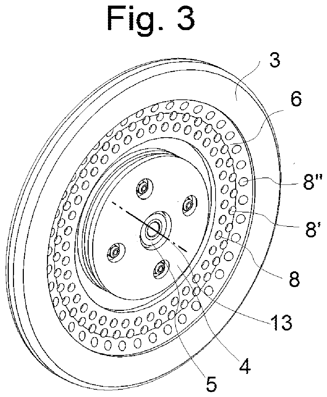

Zum besseren Verständnis ist in Figur 3 der Reifen 3 mit einem geformten, umlaufenden Steg 6 und seinen auf konzentrischen Kreisen regelmäßig angeordneten Durchbrüchen 8, 8', 8" dargestellt, welcher sonst durch den Füllkörper verdeckt würde. Der Reifen 3 mit Steg 6 wird mit oder ohne Nabe, je nach ein- oder mehrteiliger Ausführung, abdichtend in ein die Außenkontur des Füllkörpers 7 vorgebendes Spritz,- Gieß-, Press- oder Schäumwerkzeug eingelegt und vom sich vernetzendem oder vulkanisierendem Füllmaterial die Ausnehmungen 8, 8', 8" und den Steg auffüllend und umschließend, fertig hergestellt.

Es folgen drei Blatt mit Zeichnung.

**BEZUGSZEICHENLISTE**

| | |
|---|---|
| 1 | Andruckrolle |
| 2 | Landwirtschaftliche Sämaschine |
| 3 | Reifen, Reifenelement |
| 4 | Nabe |
| 5 | Lager, Rollen- oder Kugellager |
| 6 | Stegelement |
| 7 | Füllkörper |
| 8 | Ausbruch, Durchbruch |
| 9 | Furchenöffner |
| 10 | Auslass, Auslassöffnung |
| 11 | Nabenhälfte |
| 12 | Nabenhälfte |
| 13 | Achse |
| 14 | Hebel |
| 15 | Rahmen |
| 16 | Säeinheit |
| 17 | Leitung |
| 18 | Dosiereinheit |
| 19 | Stützrolle |
| 20 | Tiefenführungsrolle |

## Patentansprüche

1. Andruckrolle (1) für eine landwirtschaftliche Sämaschine (2), bestehend aus einem äußeren, umlaufenden Reifen (3) und einer innenliegenden Nabe (4) zur Aufnahme einer Rollenlagerung (5), wobei der Durchmesser des Reifens (3) ein Vielfaches seiner Breite beträgt, wobei sich zwischen Reifen (3) und Nabe (4) zumindest ein Stegelement (6) zur Führung und Stabilisierung des Reifens (3) erstreckt,
**dadurch gekennzeichnet,**
**dass** das Stegelement (6) von einem Füllkörper (7) umschlossen ist, welcher aus einem elastischen oder nachgiebigen Material gefertigt ist und welcher die Verbindung zwischen Reifen (3) und Nabe (4) bildet, wobei der Füllkörper (7) im Bereich zwischen Nabe (4) und Stegelement (6) und/oder zwischen Stegelement (6) und Reifen (3) eine form- oder stoffschlüssige Verbindung herstellt und der Füllkörper (7) eine stetige und/oder glatte Formgebung seiner seitlichen Flanken aufweist.

2. Andruckrolle nach Anspruch 1,
**dadurch gekennzeichnet,**
**dass** der Reifen (3) ebenfalls aus einem elastischen Material besteht und über zumindest eine, vorzugsweise umlaufende Hohlkammer, verfügt.

3. Andruckrolle nach Anspruch 1 oder 2,
**dadurch gekennzeichnet,**
**dass** das Material des Reifens (3) eine andere Elastizität aufweist als das Material des Füllkörpers (7).

4. Andruckrolle nach einem der vorstehenden Ansprüche,
**dadurch gekennzeichnet,**
**dass** das Stegelement (6) entweder mit den Reifen (3) oder der Nabe (4) form- oder stoffschlüssig und aus dem gleichen Material bestehend verbunden ist.

5. Andruckrolle nach einem der vorstehenden Ansprüche,
**dadurch gekennzeichnet,**
**dass** das Stegelement (6) und/oder der Füllkörper (7) über mehrere, über ihre umlaufende Fläche verteilte Ausbrüche (8) verfügen, welche eine formschlüssige Verbindung zwischen Stegelement (6) und Füllkörper (7) darstellen.

6. Andruckrolle nach einem der vorstehenden Ansprüche,
**dadurch gekennzeichnet,**
**dass** der Andruckrolle (1) ein Furchenöffner (9) und ein Auslass (10) zur Abgabe von Saatgut unmittelbar vorschaltbar sind.

7. Verfahren zur Herstellung einer Andruckrolle nach zumindest einem der vorstehenden Ansprüche 1 bis 5, wobei das Stegelement (6) zwischen dem Reifen (3) und/oder der Nabe (4) mit dem Füllkörper (7) in einem Urformverfahren umschlossen wird.

## Claims

1. A press wheel (1) for an agricultural sowing machine (2), comprising an outer, circular tire (3) and inner hub (4) for receiving a roller bearing (5), wherein the diameter of the tire (3) is a multiple of its width, wherein at least one rib element (6) extends between tire (3) and hub (4) for the guidance and stabilization of the tire (3),
**characterized in that**
the rib element (6) is enclosed by a filling body (7), which is produced from an elastic or resilient material and forms the connection between tire (3) and hub (4), wherein the filling body (7) establishes a positive-locked or material-bound connection in the area between hub (4) and rib element (6) and/or between rib element (6) and tire (3)

2. A press wheel according to claim 1,
**characterized in that**
the tire (3) also comprises an elastic material and has at least one, preferably circumferential hollow chamber.

3. A press wheel according to claim 1 or 2,
**characterized in that**
the material of the tire (3) has a different elasticity than the material of the filling body (7).

4. A press wheel according to any one of the preceding claims,
**characterized in that**
the rib element (6) is connected either to the tire (3) or to the hub (4) in a positive-locked or material-bound manner and consisting of the same material.

5. A press wheel according to any one of the preceding claims,
**characterized in that**
the rib element (6) and/or the filling body (7) has several cut-outs (8) distributed across its circumferential surface area, which constitute a positive-locked connection between rib element (6) and filling body (7).

6. A press wheel according to any one of the preceding claims,
**characterized in that**
a furrow opener (9) and an outlet (10) for delivery of seeds are connected immediately upstream of the press wheel (1).

7. A method for the production of a press wheel according to at least one of the preceding claims 1 to 5,
whereby the rib element (6) between the tire (3) and/or the hub (4) is enclosed by the filling body (7) in a primary shaping method.

## Revendications

1. Galet presseur (1) pour un semoir (2) agricole, constitué d'un pneu (3) extérieur circonférentiel et d'un moyeu (4) interne, destiné à recevoir un palier de galet (5), le diamètre du pneu (3) s'élevant à un multiple de sa largeur, entre le pneu (3) et le moyeu (4) s'étendant au moins un élément en forme de barrette (6), destiné à guider et à stabiliser le pneu (3),
**caractérisé en ce que**
l'élément en forme de barrette (6) est entouré d'un corps de remplissage (7), lequel est fabriqué en une matière élastique ou souple et lequel forme la liaison entre le pneu (3) et le moyeu (4), le corps de remplissage (7) établissant dans la zone entre le moyeu (4) et l'élément en forme de barrette (6) et/ou entre l'élément en forme de barrette (6) et le pneu (3) une liaison par complémentarité de forme ou par matière et **en ce que** le corps de remplissage (7) présente un façonnage constant et/ou lisse de ses flancs latéraux.

2. Galet presseur selon la revendication 1,
**caractérisé en ce que**
le pneu (3) est également constitué d'une matière élastique et dispose d'au moins un compartiment creux, de préférence circonférentiel.

3. Galet presseur selon la revendication 1 ou 2,
**caractérisé en ce que**
la matière du pneu (3) fait preuve d'une élasticité différente à celle de la matière du corps de remplissage (7).

4. Galet presseur selon l'une quelconque des revendications précédentes,
**caractérisé en ce que**
l'élément en forme de barrette (6) est relié par complémentarité de forme et ou par matière, soit avec le pneu (3) ou avec le moyeu (4) et en étant constitué de la même matière.

5. Galet presseur selon l'une quelconque des revendications précédentes,
**caractérisé en ce que**
l'élément en forme de barrette (6) et/ou le corps de remplissage (7) disposent de plusieurs éclatements (8) disposés sur leur surface circonférentielle, lesquels représentent une liaison par complémentarité de forme entre l'élément en forme de barrette (6) et le corps de remplissage (7).

6. Galet presseur selon l'une quelconque des revendications précédentes,
**caractérisé en ce que**
directement en amont du galet presseur (1) sont susceptibles d'être montés un traceur de sillon (9) et une sortie (10) pour la distribution de semences.

7. Procédé, destiné à fabriquer un galet presseur selon au moins l'une quelconque des revendications 1 à 5,
lors duquel, entre le pneu (3) et/ou le moyeu (4), on entoure dans un procédé de formation primaire l'élément en forme de barrette (6) avec le corps de remplissage (7).
